# EUROPEAN PATENT APPLICATION

(11) **EP 3 896 432 A1**
(43) Date of publication of application: **20.10.2021**
(21) Application number: 20315174.1
(22) Date of filing: 15.04.2020
(51) Int. Cl.: G01N 21/64, B01L 3/00, G01N 15/14, G01J 3/44, G01N 21/03

(54) **A SYSTEM AND A METHOD FOR FLUORESCENCE DETECTION**

(71) Applicant: HighFly Therapeutics (HK) Limited, Hong Kong (HK)
(72) Inventor: Ramírez Miquet, Evelio Esteban, 94400 Vitry sur Seine (FR)
(74) Representative: CH Kilger Anwaltspartnerschaft mbB

(57) **Abstract**

A system (100) and a method for detecting fluorescence is disclosed. The system (100) essentially comprises a labelled sample wherein said labelled sample emits an electromagnetic radiation of a defined wavelength when irradiated by a LASER beam of a commensurate wavelength, a source (102) for emitting said LASER beam, oriented as to aim at said labelled sample, a chamber for holding said labelled sample during said LASER irradiation, a reflective layer (108) positioned to reflect said electromagnetic radiation, and a detector (112A-E) positioned to detect and amplify said electromagnetic radiation. The method essentially comprises the steps of providing a labelled sample wherein said labelled sample emits an electromagnetic radiation of a defined wavelength when irradiated by a LASER beam of a commensurate wavelength, providing a source for emitting said LASER beam, oriented as to aim at said labelled sample, providing a chamber for holding said labelled sample during said LASER irradiation, providing a reflective layer positioned to reflect said electromagnetic radiation, providing a detector positioned to detect and amplify said electromagnetic radiation, irradiating said sample with said LASER beam and analyzing said amplified electromagnetic radiation from said detector with a signal processing block.

## Description

### BACKGROUND

Flow cytometry is a technique used to detect and measure the physical and chemical characteristics of a population of any organic or inorganic particles. For the case of a cell, this is based on one or more properties such as cell surface markers and DNA. Moreover, this technique is used for analyzing secreted/excreted expressions of cell surfaces and intracellular molecules, characterizing and defining different cell types in a heterogeneous cell population, enriching (for cells having phenotype of interest) and assessing the purity of isolated subpopulations and analyzing cell size, granulosity and volume. Thus, flow cytometry makes possible a simultaneous multi-parameter analysis of cells.

The Fluorescence Activated Cell Sorter (FACS) was invented in the late 1960s by Bonner, Sweet, Hulett, Herzenberg, and others to do flow cytometry and cell sorting of viable cells. Becton Dickinson Immunocytometry Systems introduced the commercial machines in the early 1970s. Fluorescence Activated Cell Sorting (FACS) is a specialized type of flow cytometry. It provides a method for sorting a heterogeneous mixture of biological cells into two or more containers, one cell at a time, based upon the specific light scattering and the fluorescent characteristics of each cell. It is a useful scientific instrument, as it provides fast, objective and quantitative recording of fluorescent signals from individual cells and thereby the suitable physical separation of cells of particular interest.

The cell suspension is entrained in the center of a narrow, rapidly flowing stream of liquid. The flow is arranged so that there is a large separation between cells relative to their diameter. A vibrating mechanism causes the stream of cells to break into individual droplets. The system is adjusted so that there is a low probability of more than one cell per droplet. Just before the stream breaks into droplets, the flow passes through a fluorescence measuring station where the fluorescent character of interest of each cell is measured. An electrical charging ring is placed just at the point where the stream breaks into droplets. A charge is placed on the ring based on the immediately prior fluorescence intensity measurement, and the opposite charge is trapped on the droplet as it breaks from the stream. The charged droplets then fall through an electrostatic deflection system that diverts droplets into containers based upon their charge. In some systems, the charge is applied directly to the stream, and the droplet breaking off retains charge of the same sign as the stream. The stream is then returned to neutral after the droplet breaks off.

A wide range of fluorophores can be used as labels in flow cytometry. Fluorophores, or simply "fluors." are typically attached to an antibody that recognizes a target feature on or in the cell; they may also be attached to a chemical entity with affinity for the cell membrane or another cellular structure or another cellular entity. Each fluorophore has a characteristic peak excitation and emission wavelength, and the emission spectra often overlap. Consequently, the combination of labels which can be used depends on the wavelength of the lamp(s) or laser(s) used to excite the fluorochromes and on the detectors available.

Fluorescence-activated cell sorting (FACS) provides a rapid means of isolating large numbers of fluorescently tagged cells from a heterogeneous mixture of cells. Collections of transgenic cell lines with cell type-specific expression of fluorescent marker genes such as green fluorescent protein (GFP) are ideally suited for FACS-assisted studies of individual cell types.

It has been demonstrated that flow cytometric analysis and fluorescence activated cell sorting (FACS) of plant protoplasts is practicable, moreover, this technique has yielded valuable results in a number of different fields of research (Harkins and Galbraith, 1984: Galbraith et al., 1995; Sheen et al., 1995). For instance, FACS of protoplasts from Arabidopsis plants expressing tissue-specific fluorescent protein markers has been used to examine both basal and environmentally stimulated transcriptional profiles in particular cell types (Birnbaum et al., 2003: Brady et al., 2007: Gifford et al., 2008; Dinneny et al., 2008) and flow cytometry has been employed to analyze reactive oxygen species production and programmed cell death tobacco protoplasts (Nicotiana tabacum; Lin et al., 2006). A broad selection of fluorescent tools is available to study a plethora of physiological parameters in plants, e.g., cis-regulatory elements fused to fluorescent proteins (Haseloff and Siemering, 2006), genetically encoded molecular sensors (Looger et al., 2005) or dye-based sensors (Haugland, 2002) can be used in combination with cytometry to measure diverse biological processes.

Another pivotal application involves cell sorting of mammalian cells based upon stated technique. For example, FACS for Escherichia coli lacZ gene has been adapted for use in mammalian cells and has shown utility as a marker for the expression of chimeric genes (Proc. Natl. Acad. Sci. USA Vol. 85, pp. 2603-2607, April 1988 Cell Biology). With the recent development of reporter genes detectable by flow cytometry, it has become possible to analyze the expression of a transcriptional element within an individual mammalian cell. The articles by Nolan et al. in PNAS USA 85:2603-2607 (1985) and Fiering et al. in Cytometry 12: 291-301 (1991) describe FACS-Gal, a fluorogenic assay that permits the detection and isolation of individual cells expressing lac7. The gene lac7, encodes the enzyme B-galactosidase, which cleaves the non-fluorescent Substrate fluorescein-di-B-galactopyranoside to release fluorescein.

Fluorescence Activated Droplet Sorting (FADS) is a specialized type of microfluidic sorting, based upon the principles of FACS. FADS measures the distribution of fluorescence intensity produced by fluorescent-labeled proteins on or within a particle, as well as within or on the surface of a droplet. Further, FADS is used for sorting a heterogenous mixture of populations of droplets into a plurality of containers. It should be noted that the sorting is based upon analyzing the fluorescent characteristics of each droplet or a doublet thereof i.e. one or two droplets at a time. Typically, the heterogeneous mixture of droplets contains a mix of detectable labels such as fluorescent dyes. Furthermore, when LASER light falls on a droplet, the dyes get irradiated. Due to the irradiation of the dyes, fluorescence is emitted. Thereafter, the emitted fluorescence is observed for variations to detect the appropriate characterization and categorization of each droplet.

Microfluidic droplet flow cytometry eliminates the need for vacuum containment systems and facility additions to protect operators against aerosolized pathogen exposure in conventional fluorescence activated droplet sorting (FADS). In addition, other lab-on-a-chip devices, the potential exists for further functionality integrated on-chip, such as sample preparation, cell incubation, chemical analysis, PCR, or other assays of the sorted populations. Specifically, these capabilities would enable sorting and molecular analysis of rare cells in blood such as circulating tumor cells (CTCs), circulating antigen specific B or T cells, providing powerful molecular diagnostic information concerning cancer drug resistance in a non-invasive manner for personalized therapies and/or discovering novel therapeutics candidates from patient samples.

Droplet microfluidics was first presented in the early 21st century and has since then proven itself a suitable technology for high-throughput screening of chemical and biological assays.3 The technology relies upon the controlled generation of isolated droplets in a two-phase system. The fluid comprising the droplets is termed the dispersed phase, and this is typically water or a water-based solution. The surrounding fluid is termed the continuous phase, and in combination with water-based droplets, this is usually a nonpolar fluid, such as fluorocarbon oil, silicone oil, or vegetable oil. Surfactants are often added to both the dispersed and the continuous phase for increased droplet stability. The key feature of droplet microfluidics is the generation of monodisperse droplets that are completely isolated from each other, serving as miniaturized reaction vessels. The capability of creating individual reaction vessels on the scale of pico-liter to nanoliter volumes is extremely attractive for high-throughput biological assays such as single-cell analysis, and the research field is rapidly growing. The success of the droplet microfluidic platform can further be appreciated by the fact that the technology has made it into several commercial systems such as the flow cytometers by BD Biosciences, the 10X Genomix platform for single-cell RNA analysis, and the analysis tools for digital PCR provided by Raindance Technologies. To establish complete assays on-chip, several different microfluidic unit operations need to be integrated into a complete microfluidic circuit. A range of solutions to allow for the generation of droplets, encapsulation of cells and particles, introduction and mixing of liquids in the droplets, incubation, and finally analysis of the reactions that have occurred are available today, and these methods have been carefully covered in several recent review articles. For biological assays, microparticles (such as affinity beads and cells) are usually encapsulated inside the droplets, thus also bringing a need to control these particles inside the droplets, for example, to enrich or sort them. Further, there is also a need to manipulate the droplets themselves in the microfluidic network for similar purposes. Several microparticle manipulation techniques have therefore been developed for droplet microfluidics, to manipulate encapsulated microparticles, here termed droplet internal manipulation, as well as to manipulate the individual droplets for sorting.

Droplets can be sorted by size by using the hydrodynamic method of pinched flow fractionation (PFF). Droplets that are smaller than the cross-section of the microfluidic channel follow the flow paths determined by the continuous phase. In PFF, the particles are focused to one side in a pinched segment and thereby follow different streamlines depending on their size at a broadening of this segment. An application of PFF is the one described by Maenaka et al., where oil-in-water droplets of different diameters (3.8 ± 1.5 µm, 28.8 ± 7.4 µm, and 47.7 ± 7.4 µm) were sorted into different outlets. Cao et al. have demonstrated another hydrodynamic approach where the default flow path would lead all water-in oil-droplets into a waste channel and the on-demand activation of an external solenoid valve selectively deflects the droplets of interest into a collection channel with a modest throughput of ∼30 Hz. Mazutis and Griffiths demonstrated hydrodynamic size fractionation of droplets at throughputs exceeding 4.5 kHz. Their method relied on pinching larger droplets along the vertical axis in the center of the channel restricting the movement of smaller droplets to flow near the channel walls around the larger droplets. This caused a size fractionation of droplets with a difference in volume as small as 2.33-fold. In their system, they separated the smaller droplets by incorporating a trifurcation where the larger droplets exited via the center outlet and the smaller droplets exited via the two side outlet channels. Finally, deterministic lateral displacement (DLD). In their work, they sorted aqueous droplets containing yeast cells by size where the droplets were either 11 or 30 µm, resulting from the metabolic activity of the encapsulated yeast cells. One benefit of the passive hydrodynamic technique for whole droplet manipulation is that it does not rely on any external equipment other than a pump. As a result, it can be parallelized for increased throughput which is often not the case for active techniques where external equipment and integrated sensors and actuators put a limit on the scalability.

High throughput in droplet sorting is crucial in applications where large sample volumes are processed or in applications where the sample is extremely rare such as in directed evolution and in applications focused on isolating tumor cells, and to date, dielectrophoresis holds the record. The first report on DEP sorting was by Ahn et al. where they showed sorting rates up to 4 kHz for water-in-oil droplets with diameters from 4 to 60 µm, and since then, this manipulation method has become the gold standard for droplet sorting; and it has been implemented by several research groups. For activation, the DEP sorting is most commonly equipped with an optical detection system, configured into a fluorescence activated droplet sorting (FADS) platform. One such application is the FADS sorting presented by Baret et al. where the sorting criterion was based on the fluorescence signal from the enzymatic activity within the droplets. The fastest DEP droplet sorting device presented to date is the one reported by Sciambi and Abate capable of sorting rates of 30 kHz for 25 µm diameter water-in-oil droplets. This is a very impressive throughput, but the downside is that systems incorporating DEP are often complex and rely on external driving electronics which may be a limitation for some application areas.

Magnetic-based droplet manipulation can be applied when the droplets contain magnetic particles or ferrofluids. The magnetic fields are usually provided by external permanent magnets, but electromagnets can also be used, as demonstrated by Teste et al. who achieved whole droplet manipulation by using ferromagnetic rails. Zhang et al. demonstrated continuous magnetic droplet manipulation, of ferrofluid filled pico-liter droplets in oil at rates up to 10 Hz by an external permanent magnet. However, droplet sorting by MAP is limited by the actuation speed of the permanent magnets resulting in a low throughput. Nevertheless, the throughput can be somewhat increased by the use of electromagnets but then again with the cost of a more complex setup.

Acoustic manipulation can be applied to manipulate whole droplets, using both the surface acoustic wave SAW and the bulk acoustic wave BAW operation modes. Several groups have shown that both standing surface acoustic waves SSAW and traveling surface acoustic waves TSAW can be used to sort droplets either at a bifurcation channel split or at a multichannel outlet with throughput up to 3 kHz for droplets as small as 20 µm in diameter (-4 pL volume) and for elongated droplets as large as 2.6 nL in volume. BAW manipulation methods have been applied to sort whole droplets, both oil-in-water droplets and water-in-oil droplets. The microfluidic system is designed so that the default flow path of the droplets is toward the waste outlet due to its lower hydrodynamic resistance. The primary acoustic radiation force is then used to selectively affect the droplets so that they instead follow the flow path toward the collection channel. Lee et al. sorted 50 and 100 µm diameter oleic acid droplets in an aqueous continuous phase with a 99.3% and 85.3% efficiency, respectively, at a rate of 60 Hz. Leibacher et al. demonstrated merging and sorting of 200 µm diameter aqueous droplets in an organic continuous phase with a throughput of <10 Hz by placing the droplets at the acoustic pressure nodal lines These reported acoustic sorting methods are today considerably slower than the DEP sorting techniques, but they have the advantage of being independent of the electrical conductivity of both the dispersed and the continuous phase. When choosing between the SAW and BAW operation modes, the BAW approach has the advantage of a simpler acoustic transducer setup since BAW does not require custom integrated transducers but instead relies on externally mounted transducers which are a readily available retail technology. On the other hand, the BAW mode is the slower of the two acoustic whole droplet manipulation techniques, having problems surpassing a throughput of 100 Hz.

Another category of methods to manipulate whole droplets involves the application of heat to the droplet system. Yap et al. have shown the implementation of a microheater at a microchannel bifurcation for on-demand control of water-in-oil droplets (approximately 100 µm wide, 200 µm long, and 30 µm high).

Now, such fluorescence released from FADS can get scattered in all directions i.e. 360° and can thus result in reduced efficiency of the detection of fluorescence emitted from the particle/droplet. Therefore, there is a need for a system and a method for improving fluorescence detection which results in increased efficiency, power, and gain of the fluorescence detection system.

### SUMMARY OF THE INVENTION

The present invention generally relates to a system and a method for fluorescence (or luminescence) detection. The subject matter of the of the present invention involves an alternative solution to a particular problem.

In one aspect, the present invention is generally directed to a system for detecting fluorescence. In one set of embodiments, the system comprises a labelled sample wherein said labelled sample emits an electromagnetic radiation of a specific wavelength range when irradiated by a LASER beam of a corresponding specific wavelength range, a source for emitting said LASER beam oriented as to aim at said labelled sample, a chamber for holding said labelled sample during said LASER irradiation, a reflective layer positioned to reflect said electromagnetic radiation, and a detector positioned to detect and amplify said electromagnetic radiation. The excitation source can be a light emitting diode (LED) as well, coupled with a narrow bandpass filter that enables the fluorescence to be generated without overlapping with the spectral emission of the LED.

In one set of embodiments, the system additionally comprises a first and a second dichroic mirrors, said first dichroic mirror positioned between said source and said chamber, said second dichroic mirror positioned between said first dichroic mirror and said detector, wherein said first dichroic mirror deflects said electromagnetic radiation reflected from said reflective layer towards said second dichroic mirror which further deflects to said detector. In more detail, the first dichroic mirror transmits the laser radiation coming from the laser sources towards the microfluidic chip or chamber. The radiation that comes back from the microfluidic chip (reflected laser(s) at the droplet surfaces plus the fluorescence) is reflected by the first dichroic mirror towards the secondary dichroics but only when it comes from the chip. That said, the first dichroic is transparent to the lasers in one direction and perfectly reflective in the opposite direction for both the lasers and the fluorescence.

In another set of embodiments, the system further comprises a lens for focusing and shaping said LASER beam on said sample and a signal processing block for analyzing said detector-amplified electromagnetic radiation.

In another aspect, the present invention is a method for detecting and or reflecting the fluorescence according to said system comprising the steps of providing a labelled sample wherein said labelled sample emits an electromagnetic radiation of a defined wavelength when irradiated by a LASER beam of a commensurate wavelength, providing a source for emitting said LASER beam, oriented as to aim at said labelled sample, providing a chamber for holding said labelled sample during said LASER irradiation, providing a reflective layer positioned to reflect said electromagnetic radiation, providing a detector positioned to detect and amplify said electromagnetic radiation, irradiating said sample with said LASER beam and analyzing said amplified electromagnetic radiation from said detector with a signal processing block.

In another set of steps, the method further comprises the steps of providing a lens for focusing and shaping said LASER beam on said sample and providing a signal processing block for analyzing said detector-amplified electromagnetic radiation.

Herein, fluorescence refers to radiation produced by a substance that has absorbed another radiation, which has a longer wavelength than the radiation which has been absorbed.

Herein, LASER refers to a device that generates an intense beam of coherent monochromatic electromagnetic radiation caused by stimulated emission of photons from excited atoms or molecules. Of course, the laser is not the only possible light source. Light sources include but are not limited to a light bulb, an LED, or the like. The light sources other than the Lasers, could be coupled to a narrow filter to excite at wavelengths far from the detection bandwidth.

### BRIEF DESCRIPTION OF THE DRAWINGS

FIG. 1 illustrates a system [100] for fluorescence detection, according to the main embodiment of the present invention. The system [100] includes one or more excitation sources [102], a first dichroic mirror [104], and a microscope objective (MO) [106]. The system [100] may include some other components such as a mirror or a lens, without departing from the scope of the disclosure.

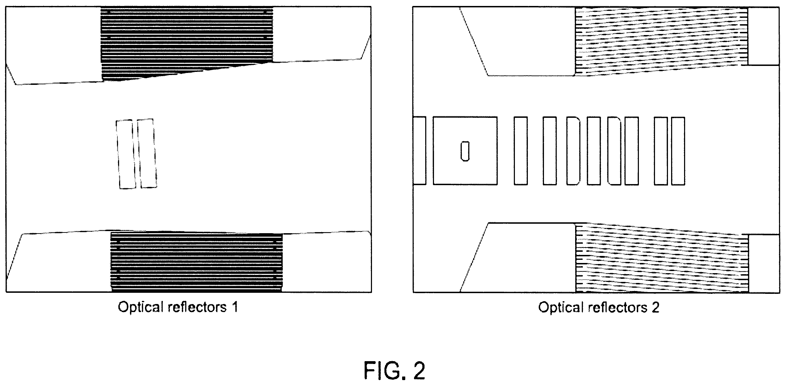

FIG. 2 illustrates different shapes and positioning of the reflective layers integrated into the microfluidics chip circuit. This is a top view of the chip. The reflectors are the rectangles in the center, and the lines on both sides are the electrodes. The figure shows reflective layers with different shapes (square, rectangle) with different area of visualization of fluorescent signal and signal enhancement (small, large, squared opened surface).

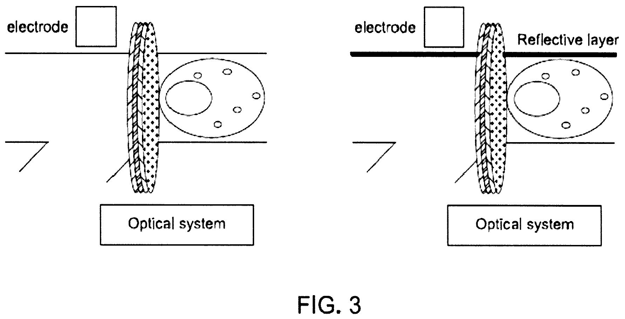

FIG. 3 Illustrates the system of the invention.

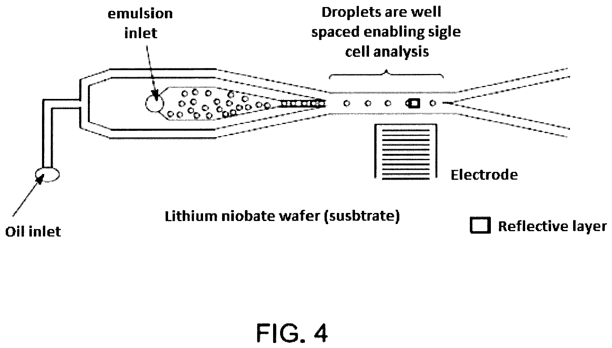

FIG. 4 illustrates an embodiment of the microfluidic chip upon which the FADS process occurs. The substrate in this embodiment is lithium niobate wafer.

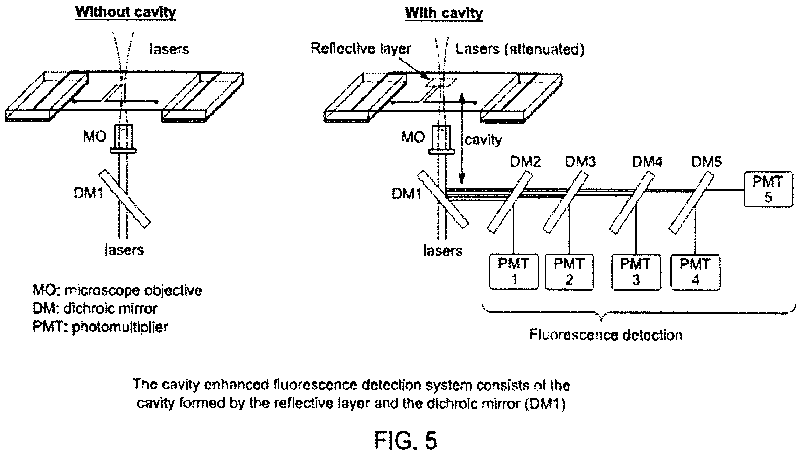

FIG. 5 shows a system that comprises five LASERs and five dichroic mirrors.

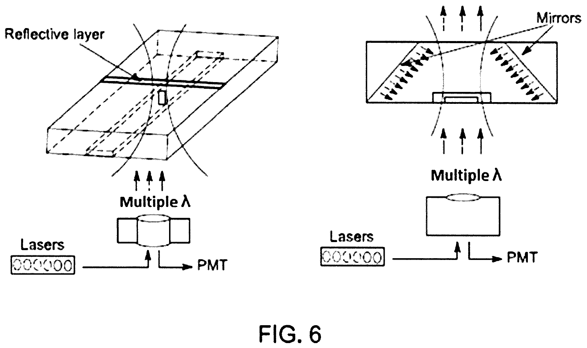

FIG. 6 illustrates two distinct embodiments of the present invention: one incorporating the layer on the chip or by including a mirror on top of the chip.

### DETAILED DESCRIPTION OF THE INVENTION

One aspect of the present invention is a system for detecting fluorescence comprising a labelled sample wherein said labelled sample emits an electromagnetic radiation of a defined wavelength when irradiated by a LASER beam of a commensurate wavelength, a source for emitting said LASER beam, oriented as to aim at said labelled sample, a chamber and/or channel for holding said labelled sample during said LASER irradiation, a reflective layer positioned to reflect said electromagnetic radiation, and a detector positioned to detect and amplify said electromagnetic radiation. In addition to the reflected electromagnetic radiation, the detector also detects and amplifies electromagnetic radiation directly emitted from the sample not having been reflected by the reflective layer. Similarly, in addition to the emitted electromagnetic radiation, the reflective layer reflects the LASER beam. The labelled sample comprises a labelled biological cell. And said label comprises a fluorescent dye which further comprise streptavidin-BV421 and DY 777. The reflective layer is of a shape comprising rectangle and square or a combination thereof. In some cases, the labelled samples are sorted after analysis using a method comprising acoustic actuation.

A "sample" in the meaning of the invention can be all biological tissues and all fluids such as lymph, urine, cerebral fluid. Tissues may be, e.g. epithelium tissue, connective tissue such as bone or blood, muscle tissue such as visceral or smooth muscle and skeletal muscle and, nervous tissue. The sample is collected from the patient or subjected to the diagnosis according to the invention.

A "sample" in the meaning of the invention may also be a sample originating from an environmental source, such as a plant sample, a water sample, a soil sample, or may be originating from a household or industrial source or may also be a food or beverage sample.

A "sample" in the meaning of the invention may also be a sample originating from a biochemical or chemical reaction or a sample originating from a pharmaceutical, chemical, or biochemical composition.

Where appropriate, as for instance in the case of solid samples, the sample may need to be solubilized, homogenized, or extracted with a solvent prior to use in the present invention in order to obtain a liquid sample. A liquid sample hereby may be a solution or suspension.

Liquid samples may be subjected to one or more pre-treatments prior to use in the present invention. Such pre-treatments include, but are not limited to dilution, filtration, centrifugation, concentration, sedimentation, precipitation, dialysis ...

Pre-treatments may also include the addition of chemical or biochemical substances to the solution, such as acids, bases, buffers, salts, solvents, reactive dyes, detergents, emulsifiers, chelators,...

In the context of the present invention, fluorescent dyes or labels may for example be FAM (5-or 6-carboxyfluorescein), VIC, NED, Fluorescein, Fluoresceinisothiocyanate (FITC), IRD-700/800, Cyanine dyes, auch as CY3, CY5, CY3.5, CY5.5, Cy7, Xanthen, 6-Carboxy-2',4',7',4,7-hexachlorofluorescein (HEX), TET, 6-Carboxy-4',5'-dichloro-2',7'-dimethodyfluorescein (JOE), N,N,N',N'-Tetramethyl-6-carboxyrhodamine (TAMRA), 6-Carboxy-X-rhodamine (ROX), 5-Carboxyrhodamine-6G (R6G5), 6-carboxyrhodamine-6G (RG6), Rhodamine,Rhodamine Green, Rhodamine Red, Rhodamine 110, BODIPY dyes, such as BODIPY TMR, Oregon Green, Coumarines such as Umbelliferone, Benzimides, such as Hoechst 33258; Phenanthridines, such as Texas Red, Yakima Yellow, Alexa Fluor, PET, Ethidiumbromide, Acridinium dyes, Carbazol dyes, Phenoxazine dyes, Porphyrine dyes, Polymethin dyes, and the like.

Preferred fluorophores (labels) include, a fluorophore, preferably selected from the group of fluorophores comprising 5 or 6 carboxyfluorescein (FAM™), VIC™, NED™, fluorescein, fluorescein isothiocyanate (FITC), IRD-700/800, cyanine dyes, such as CY3™, CY5™, CY3.5™, CY5.5™, Cy7™, xanthen, 6-carboxy-2',4',7',4,7-hexachlorofluorescein (HEX), 6-carboxy-1,4-dichloro-2',7'-dichloro-fluorescein (TET®), 6-carboxy-4',5'-dichloro-2',7'-dimethodyfluorescein (JOE™), N,N,N',N'-tetramethyl-6-carboxyrhodamine (TAMRA™), 6-carboxy-X-rhodamine (ROX), 5-carboxyrhodamine-6G (R6G5), 6-carboxyrhodamine-6G (RG6), rhodamine, rhodamine green, rhodamine red, rhodamine 110, Rhodamin 6G®, BODIPY dyes, such as BODIPY TMR, oregon green, coumarines, such as umbelliferone, benzimides, such as Hoechst 33258; phenanthridines, such as Texas Red®, California Red®, Yakima Yellow, Alexa Fluor® 350, Alexa Fluor® 405, Alexa Fluor® 430, Alexa Fluor® 488, Alexa Fluor® 500, Alexa Fluor® 514, Alexa Fluor®532, Alexa Fluor® 546, Alexa Fluor® 555, Alexa Fluor® 568, Alexa Fluor® 594, Alexa Fluor® 610, Alexa Fluor® 633, Alexa Fluor® 647, Alexa Fluor® 660, Alexa Fluor® 680, Alexa Fluor® 700, Alexa Fluor® 750, PET®, ethidium bromide, acridinium dyes, carbazol dyes, phenoxazine dyes, porphyrine dyes, polymethin dyes, Atto 390, Atto 425, Atto 465, Atto 488, Atto 495, Atto 520, Atto 532, Atto 550, Atto 565, Atto 590, Atto 594, Atto 620, Atto 633, Atto 647N, Atto 655, Atto RhoG6, Atto Rho11, Atto Rho12, Atto Rho101, BMN™-5, BMN™-6, CEQ8000 D2, CEQ8000 D3, CEQ8000 D4, DY 480XL, DY 485XL, DY-495, DY-505, DY-510XL, DY-521XL, DY-521XL, DY-530, DY-547, DY-550, DY-555, DY-610, DY-615, DY-630, DY-631, DY-633, DY-635, DY-647, DY-651, DY-675, DY-676, DY-680, DY-681, DY-700, DY-701, DY-730, DY-731, DY-732, DY-750, DY-751, DY-776, DY-780, DY-781, DY-782, 6 carboxy-4',5'-dichloro-2',7'-dimethoxy-fluorescein (JOE), TET™, CAL Fluor® Gold 540, CAL Fluor RED 590, CAL Fluor Red 610, CAL Fluor Red 635, IRDye® 700Dx, IRDye® 800CW, Marina Blue®, Pacific Blue®, Yakima Yellow®, 6-(4,7-Dichloro-2',7'-diphenyl-3',6'-dipivaloylfluorescein-6-carboxamido)-hexyl-1-O-(2-cyano,ethyl)-(N,N-diiso¬propyl)-phosphoramidite (SIMA), CAL Fluor® Gold 540, CAL Fluor® Orange 560, CAL Fluor Red 635, Quasar 570, Quasar 670, LIZ, Sunnyvale Red, LC Red® 610, LC Red® 640, LC Red®670, and LC Red® 705. In a further preferred embodiment of the present invention the label is selected from the group of fluorophores consisting of Atto 465, DY-485XL, FAM™, Alexa Fluor® 488, DY-495, Atto 495, DY-510XL, JOE, TET™, CAL Fluor® Gold 540, DY-521XL, Rhodamin 6G®, Yakima Yellow®, Atto 532, Alexa Fluor®532, HEX, SIMA, Atto RhoG6, VIC, CAL Fluor Orange 560, DY-530, TAMRA™, Quasar 570, Cy3™, NED™, DY-550, Atto 550, Alexa Fluor® 555, PET®, CAL Fluor RED 590, ROX, Texas Red®, CAL Fluor Red 610, CAL Fluor Red 635, Atto 633, Alexa Fluor® 633, DY-630, DY-633 ,DY-631, LIZ, Quasar 670, DY-635, and Cy5™. In a yet further preferred embodiment the label is selected from group of fluorophores consisting of FAM™, DY-510XL, DY-530, and Atto 550.

Often and preferably, a label may be used to detect or attached to a particular biomarker. The term biomarker (biological marker) was introduced in 1989 as a Medical Subject Heading (MeSH) term: "measurable and quantifiable biological parameters (eg, specific enzyme concentration, specific hormone concentration, specific gene phenotype distribution in a population, presence of biological substances) which serve as indices for health- and physiology-related assessments, such as disease risk, psychiatric disorders, environmental exposure and its effects, disease diagnosis, metabolic processes, substance abuse, pregnancy, cell line development, epidemiologic studies, etc." In 2001, an NIH working group standardized the definition of a biomarker as "a characteristic that is objectively measured and evaluated as an indicator of normal biological processes, pathogenic processes, or pharmacologic responses to a therapeutic intervention". A biomarker may be measured on a biosample (as a blood, urine, or tissue test), it may be a recording obtained from a person (blood pressure, ECG, or Holter), or it may be an imaging test (echocardiogram or CT scan). Biomarkers can indicate a variety of health or disease characteristics, including the level or type of exposure to an environmental factor, genetic susceptibility, genetic responses to exposures, markers of subclinical or clinical disease, or indicators of response to therapy. Thus, a simplistic way to think of biomarkers is as indicators of disease trait (risk factor or risk marker), disease state (preclinical or clinical), or disease rate (progression). Accordingly, biomarkers can be classified as antecedent biomarkers (identifying the risk of developing an illness), screening biomarkers (screening for subclinical disease), diagnostic biomarkers (recognizing overt disease), staging biomarkers (categorizing disease severity), or prognostic biomarkers (predicting future disease course, including recurrence and response to therapy, and monitoring efficacy of therapy).

Biomarkers may also serve as surrogate end points. The underlying principle is that alterations in the surrogate end point track closely with changes in the outcome of interest. Additional values of surrogate end points include the fact that they are closer to the exposure/intervention of interest and may be easier to relate causally than more distant clinical events. In the present case, samples may be taken from patients and specifically labelled in accordance with a surrogate endpoint analysis.

In one set of embodiments, the system additionally comprises a first and a second dichroic mirrors, said first dichroic mirror positioned between said source and said chamber, said second dichroic mirror positioned between said first dichroic mirror and said detector, wherein said first dichroic mirror deflects said electromagnetic radiation reflected from said reflective layer towards said second dichroic mirror which further deflects to said detector. The predefined angle of said first dichroic mirror to said source comprises ±45° and ±135° but precludes 180°. Also, the predefined angle of said reflective layer to said first dichroic mirror precludes 180°.

In another set of embodiments, the system further comprises a lens for focusing and shaping said LASER beam on said sample and a signal processing block for analyzing said detector-amplified electromagnetic radiation. In one case, the lens comprises a Powell lens.

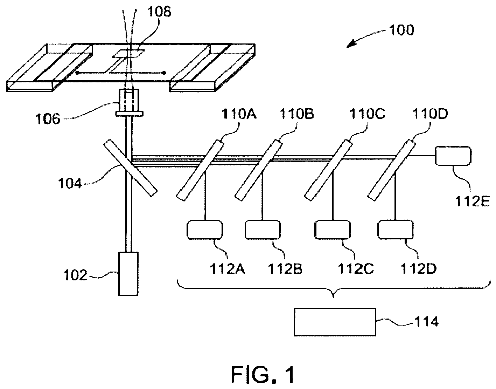

FIG.1 shows the system according to one set of embodiments comprising one or more excitation sources 102, a first dichroic mirror 104, and a microscope objective (MO) 106. In some cases, the system may comprise one or more additional mirror(s) to reflect the LASER beam towards the sample, without departing from the scope of the disclosure. The one or more excitation sources 102 may be configured for emitting a particular type of Light Amplification by Stimulated Emission of Radiation (LASER) i.e. laser beam. In certain embodiments, the one or more excitation sources 102 may correspond to a first excitation source and a second excitation source. The first excitation source may be a visible LASER and the second excitation source may be an Infrared (IR) LASER. In other embodiments, the source(s) is configured to emit LASER beam with a wavelength comprising the specific electromagnetic spectrum of range between and including 405nm and 730nm. Accordingly, the wavelength of the emitted electromagnetic radiation from the sample comprises the specific electromagnetic spectrum of range between and including 423nm and 771 nm. The dichroic mirrors would be made of materials from the group comprising silica and germanium. The microscope objective would have an optical zoom within the range of 4x-40x in air/oil/water.

The reflective layer and the chamber form part of a microfluidic chip manufactured by photolithography or chemical or physical etching. Furthermore, the chip would be manufactured using a material from the group of high reflectance metals for visible and infrared spectral radiation comprising titanium, platinum, gold and aluminum. The reflective layer would form a cavity in combination with said first dichroic mirror.

Another aspect of the present invention is a method for detecting fluorescence according to said system comprising the steps of providing a labelled sample wherein said labelled sample emits an electromagnetic radiation of a defined wavelength when irradiated by a LASER beam of a commensurate wavelength, providing a source for emitting said LASER beam, oriented as to aim at said labelled sample, providing a chamber for holding said labelled sample during said LASER irradiation, providing a reflective layer positioned to reflect said electromagnetic radiation, providing a detector positioned to detect and amplify said electromagnetic radiation, irradiating said sample with said LASER beam and analyzing said amplified electromagnetic radiation from said detector with a signal processing block.

In one set of steps, the method additionally comprises providing a first and a second dichroic mirrors, providing said first dichroic mirror positioned between said source and said chamber, and providing said second dichroic mirror positioned between said first dichroic mirror and said detector, wherein said first dichroic mirror deflects said electromagnetic radiation reflected from said reflective layer towards said second dichroic mirror which further deflects to said detector.

In another set of steps, the method further comprises the steps of providing a lens for focusing and shaping said LASER beam on said sample and providing a signal processing block for analyzing said detector-amplified electromagnetic radiation.

The disclosed invention encompasses numerous advantages. Various embodiments of a reflective layer enhanced fluorescence detection system and method are disclosed. Such reflective-layer enhanced fluorescence detection system allows maximum emitted fluorescence to reach a detector and thus results in increasing efficiency of detection of biological cells.

Further, the reflective layer enhanced fluorescence detection system improves detection thresholding at low fluorescent levels by increasing and filtering signals in the violet-blue region. Such method and system increase collected power and gain of at least 20 percent of the fluorescence of violet-blue color, the fluorescence of red color, and the infrared fluorescence. Therefore, such system and method for improving fluorescence detection result in increased efficiency, power, and gain of the fluorescence detection system.

The invention also relates to a method for detecting and/or measuring the fluorescence from a sample comprising providing for a system according to the invention, providing for a labelled sample, and detecting and/or measuring the fluorescence emitted from said sample.

Fluorescence refers to the emission of electromagnetic radiation, especially of visible light, stimulated in a substance by the absorption of incident radiation and persisting only as long as the stimulating radiation is continued, as well as the emitted electromagnetic radiation itself.

As used herein detecting means, determining whether or not a defined and specified sample type is present in an assay to be performed. Herein, the radiation emitted by the labelled sample is used as an indicator for said detection.

As used herein measuring may mean measuring the emission's i) wavelength or ii) the amplitude.

Measuring and detecting may also be done for a sample that comprises more than one label type.

The whole set of detection over different spectral bands is enhanced by placing the laser under the reflective layers with droplets passing below the embedded reflectors. It is observed that the detection efficiency is improved by around at least 15 % with the gold layer and around 27 % with the aluminium layer in the spectral band 405-440 nm.

## Claims

1. A system for detecting fluorescence comprising:
a. a labelled sample wherein said labelled sample emits an electromagnetic radiation of a defined wavelength when irradiated by a LASER beam of a commensurate wavelength,
b. a source for emitting said LASER beam, oriented as to aim at said labelled sample,
c. a chamber for holding (mobile or immobile) said labelled sample during said LASER irradiation,
d. a reflective layer positioned to reflect said electromagnetic radiation,
e. a detector positioned to detect and amplify said electromagnetic radiation.

2. The system according to claim 1, additionally comprising:
a. a first and a second dichroic mirrors,
b. said first dichroic mirror positioned between said source and said chamber,
c. said second dichroic mirror positioned between said first dichroic mirror and said detector,
wherein said first dichroic mirror deflects said electromagnetic radiation reflected from said reflective layer towards said second dichroic mirror which further deflects to said detector.

3. The system according to claims 1 and 2, further comprising:
a. a lens for focusing and shaping said LASER beam on said sample,
b. a signal processing block for analyzing said detector-amplified electromagnetic radiation.

4. The system according to claims 1 to 3, wherein said detector also detects and amplifies said electromagnetic radiation directly emitted from said sample without being reflected by said reflective layer.

5. The system according to claims 1 to 4, wherein said reflective layer also reflects said LASER beam.

6. The system according to claims 1 to 5, wherein said LASER beam's wavelength comprises the visible and the infrared electromagnetic spectra.

7. The system according to claims 1 to 6, wherein the predefined angle of said first dichroic mirror to said source comprises ±45° and ±135° but precludes 180°.

8. The system according to claims 1 and 7, wherein the predefined angle of said reflective layer to said first dichroic mirror precludes 180°.

9. The system according to claims 1 to 8, wherein said labelled sample comprises a labelled biological cell.

10. The system according to claims 1 to 9, wherein said label comprises a fluorescent dye.

11. The system according to claims 1 to 10, wherein said fluorescent dye comprises streptavidin-BV421 and DY 777.

12. The system according to claims 1 to 11, wherein said reflective layer is of a shape comprising rectangle and square or a combination thereof.

13. The system according to claims 1 to 12, wherein said electromagnetic radiation's wavelength comprises the specific electromagnetic spectrum of range between and including 423nm and 763 nm.

14. The system according to claims 1 to 13, wherein said source is configured to emit a LASER beam with a wavelength comprising the specific electromagnetic spectrum of range between and including 405nm and 730nm.

15. The system according to claims 1 to 14, wherein said lens comprises a Powell lens.

16. The system according to claims 1 to 15 comprising one or more additional mirror(s) to reflect said LASER beam towards said sample.

17. The system according to claims 1 to 16, wherein said reflective layer and said chamber constitute parts of a microfluidic chip manufactured by photolithography.

18. The system according to claims 1 to 17, wherein said microfluidic chip is manufactured using a material from the group of high reflectance metals for visible and infrared spectral radiation comprising titanium, platinum, gold and aluminum.

19. The system according to claims 1 to 18, wherein said labelled samples are sorted prior to analysis using a method comprising acoustic actuation.

20. The system according to claims 1 to 19, wherein said reflective layer forms a cavity in combination with said first dichroic mirror.

21. A method for detecting and/or measuring the fluorescence from a sample comprising:
i. providing for a system according to claims 1 to 20,
ii. providing for a labelled sample,
iii. detecting and/or measuring the fluorescence emitted from said sample.
